# EUROPÄISCHE PATENTANMELDUNG

(11) **EP 1 494 328 A1**
(43) Veröffentlichungstag der Anmeldung: **05.01.2005**
(21) Anmeldenummer: 04405393.2
(22) Anmeldetag: 23.06.2004
(51) Int. Cl.: H02G 3/04

(54) **Vorrichtung zur Montage von Kabel**

(30) Priorität: 04.07.2003 CH 11792003
(71) Anmelder: ZURECON AG, CH-8003 Zürich (CH)
(72) Erfinder: Pfluger, Gerd, 4625 Oberbuchsiten (CH)
(74) Vertreter: RUTZ & PARTNER

(57) **Zusammenfassung**

Die Vorrichtung (1), die der Montage von Kabeln (2) an einer Wand (6), an einer Seitenwand, am Boden oder an der Decke, dient, weist in Längsrichtung, parallel zu den zu verlegenden Kabeln (2), sowie dazu in Querrichtung verlaufende Strukturelemente (17, 16) auf, zwischen denen Öffnungen (18) gebildet werden, in die für die Befestigung der Kabel (2) vorgesehene Montagemittel (5) einführbar sind. Erfindungsgemäss sind die in Querrichtung verlaufenden Strukturelemente (17) derart geformt und mit den in Längsrichtung verlaufenden Strukturelementen (16) verbunden, dass die installierte Vorrichtung (1) ein in einer ersten Ebene parallel zur Wand und davon beabstandet verlaufendes Mittelteil (12) aufweist, welches über zwei schräg zur genannten Ebene verlaufende Verbindungsteile (14, 15) beidseitig mit je einem an der Wand (6) montierbaren Seitenteil (11, 13) verbunden ist.

## Beschreibung

Die Erfindung betrifft eine Vorrichtung zur Montage von Kabel nach dem Oberbegriff des Patentanspruchs 1.

In Gewerbe- Industrie- und Verwaltungsgebäuden werden Kabel, insbesondere Kabel für Stark- und Schwachstromnetze, infolge fehlender Eigenstabilität in Kabelführungsvorrichtungen hinein gelegt und so beispielsweise von einem Schaltfeld einer Zentrale zu den Verbrauchern geführt.

Derartige Kabelführungsvorrichtungen, wie sie in [1], Produktkatalog der LANZ OENSINGEN AG, August 2001; auf Seiten 18 und 44 gezeigt sind, sind beispielsweise mittels Deckenstützen, Auslegern oder Mittenaufhängungsgarnituren an der Decke oder mittels weiteren Montagegarnituren an Wänden montierbar.

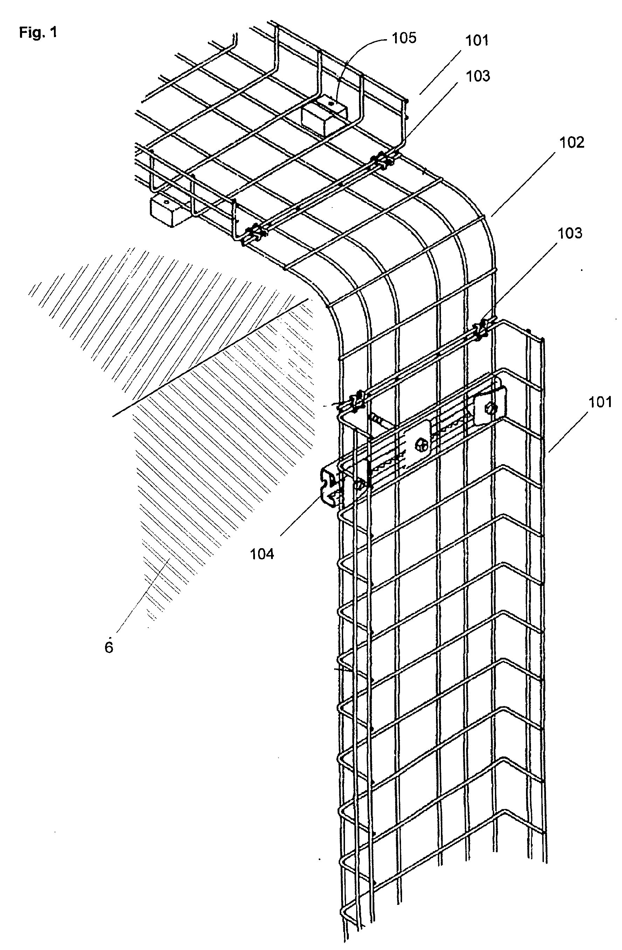

Auch in Steigzonen, hinter abgehängten Decken oder unter Doppelböden, d.h. wo wenig Raumtiefe zur Verfügung steht, müssen Strom-, Daten-, Steuer- und Kommunikationskabel einwandfrei geführt und befestigt werden. Bei mittleren und grösseren Kabelmengen werden in Steigzonen daher oft U-förmig ausgestaltete Gitterbahnen oder flache Drahtnetze eingesetzt, wie sie in [1], Seite 44, oder nachstehend in Figur 1 gezeigt sind. Diese aus geschweisstem Rundstahl gefertigten Gitterbahnen 101 oder Drahtnetze 102 werden (siehe [1], Seite 44) mittels Schrauben und Dübel am Baukörper befestigt. An den Gitterbahnen 101 und/oder Drahtnetzen 102 werden die Kabel, einzeln oder gebündelt, beispielsweise mittels Kabelbindern oder Schnellverbindern befestigt.

Nachteilig bei der Verwendung dieser Gitterbahnen 101 und/oder Drahtnetzen 102 ist jedoch, dass diese, sofern sie ohne Abstandshalter montiert werden, eng an der Wand des Baukörpers anliegen. Dies führt einerseits dazu, dass die an der Wand anliegenden Kabel von hinten und, sofern die Kabel gebündelt sind, auch von vorn nicht belüftet sind, weshalb eine Erwärmung der Kabel, ein entsprechender Mehrverbrauch an Energie und gegebenenfalls Störungen auftreten können. Andererseits ist es möglich, dass an der Wand anhaftende Feuchtigkeit oder Flüssigkeiten in den Kabelbereich gelangen können, wodurch Verschmutzungen oder elektrische Störungen an Kontaktstellen verursacht werden können.

Besonders nachteilig ist, dass beim Anliegen der Gitterbahnen 101 und/oder Drahtnetzen 102 an der Wand, Verbindungselemente nur schwer montierbar sind. Zudem wird das Anbinden der Kabel mittels Kabelbindern oder Schnellverlegern dadurch zwar nicht verunmöglicht, erfordert jedoch Geschicklichkeit und einen entsprechenden Zeitaufwand. Auch die Montage von Ordnungstrennern, die der geordneten Unterteilung der zu montierenden Kabel dienen, oder von Apparatemontageplatten wird durch das direkte Anliegen der Gitterbahnen 101 und/oder Drahtnetzen 102 an der Wand erheblich erschwert.

Oft werden daher die in Figur 1 gezeigten Befestigungsgarnituren 104 und Auflagekissen 105 verwendet, die als Abstandshalter dienende Profilelemente, beispielsweise C-Profilteile enthalten. Die positionsrichtige Montage dieser Befestigungsgarnituren 104 und Auflagekissen 105 ist jedoch mit Material- und erheblichem Montageaufwand verbunden.

Aufgrund des Gewichts der Kabel und der fehlenden Stabilität der Gitterbahnen 101 und insbesondere der Drahtnetze 102 ist jedoch auch bei der Verwendung von Abstandshaltern nicht gewährleistet, dass die Gitterbahnen 101 und Drahtnetze 102 zwischen den Abstandshaltern nicht an der Wand anliegen.

Zur Verhinderung des funktionell und optisch störenden Durchbiegens der Drahtnetze 102 sind daher Montagemittel in kürzeren Abständen vorzusehen, was wiederum mit erheblichem Material- und Arbeitsaufwand verbunden ist.

Besonders nachteilig bei den stabileren Gitterbahnen 101 ist, dass sie, im Gegensatz zu den flachen Drahtnetzen, nicht stapelbar sind, und damit mehr Platz für Transport und Lagerung benötigen. In Bereichen, in denen ohnehin kaum genügend Raum vorhanden ist, ist bei den U-förmigen Gitterbahnen 101 ferner nachteilig, dass deren Seitenwände nach der Montage mehr Platz benötigen als die dazwischen gehaltenen Kabel oder Kabelbünde.

Der vorliegenden Erfindung liegt daher die Aufgabe zugrunde, eine verbesserte Vorrichtung zur Montage von Kabel zu schaffen.

Insbesondere ist eine kostengünstig herstellbare, den wechselnden Bedürfnissen anpassbare, und einfach montierbare Vorrichtung zu schaffen, mittels der Kabel in Steigzonen schnell und geordnet verlegt und befestigt werden können.

Weiterhin sollen Kabel mittels der Vorrichtung derart installiert werden können, dass die erforderliche Luftzirkulation gewährleistet ist und Einwirkungen durch Fremdstoffe weitgehend unterdrückt werden.

Die Vorrichtung soll ferner eine hohe Stabilität aufweisen und bei der Lagerung am Herstellungs- und Installationsort, beim Transport sowie nach der Montage wenig Raum in Anspruch nehmen.

Diese Aufgabe wird mit einer Vorrichtung gelöst, welche die in Anspruch 1 angegebenen Merkmale aufweist. Vorteilhafte Ausgestaltungen der Erfindung sind in weiteren Ansprüchen angegeben.

Die Vorrichtung, die der Montage von Kabel an einer Wand, an einer Seitenwand, am Boden oder an der Decke, dient, weist in Längsrichtung, zumindest annähernd parallel zu den zu verlegenden Kabeln, sowie dazu in Querrichtung verlaufende Strukturelemente auf, zwischen denen Öffnungen gebildet werden, in die für die Befestigung der Kabel vorgesehene Montagemittel einführbar sind.

Erfindungsgemäss sind die in Querrichtung verlaufenden Strukturelemente derart geformt und mit den in Längsrichtung verlaufenden Strukturelementen verbunden, dass die installierte Vorrichtung ein in einer ersten Ebene parallel zur Wand und davon beabstandet verlaufendes Mittelteil aufweist, welches über zwei schräg zur genannten Ebene verlaufende Verbindungsteile beidseitig mit je einem an der Wand montierbaren Seitenteil verbunden ist.

Nach der Montage der erfindungsgemässen Vorrichtung, die ohne Abstandshalter erfolgen kann, ist das zum Halten der Kabel vorgesehene Mittelteil daher von der angrenzenden Wand beabstandet, so dass die zur Ordnung und/oder Befestigung von Kabel dienenden Montagemittel in einfacher Weise montierbar sind. Beispielsweise kann ein Kabelbinder durch eine erste im Mittelteil vorgesehene Öffnung in den Kanal eingeführt und durch eine zweite im Mittelteil vorgesehene Öffnung rasch wieder aus dem Kanal herausgeführt werden, so dass der Kabelbinder um ein Strukturelement geführt ist und eines oder mehrere am Mittelteil anliegende Kabel umschliessen und halten kann. Zwischen der Wand und dem Mittelteil der Vorrichtung wird daher ein freier Kanal gebildet, innerhalb dessen die Luft frei zirkulieren kann, so dass einer Erwärmung der Kabel entgegen gewirkt wird. Ferner wird durch den Abstand von Mittelteil und Seitenteilen bzw. Wand, der vorzugsweise fünf oder mehr Zentimeter beträgt, die direkte Kontaktierung von Kabeln und Wand vermieden.

Die gewählte mehrfache Krümmung oder Biegung der Vorrichtung, die bewirkt, dass das Mittelteil in einer ersten und die mittels Schrauben mit der Wand verbindbaren Seitenteile in einer zweiten, dazu parallelen Ebene verlaufen, verleiht der Vorrichtung ferner eine hohe Stabilität, welche unerwünschte Verbiegungen der Vorrichtung nach deren Installation verhindert.

Die erfindungsgemässe Vorrichtung kann aus verschiedenen Materialien gefertigt werden. Die Strukturelemente können draht-, zylinder- oder stabförmige Kunststoff- oder Metallelemente sein. In vorzugsweisen Ausgestaltungen sind die Strukturelemente mit einem Kunststoff oder mit nicht korrodierendem Metall beschichtet.

Möglich ist ferner die Verwendung eines gelochten Blechs, das zur Bildung des Mittelteils, der Verbindungs- und der Seitenteile entsprechend gebogen wird.

Die beiden Verbindungsteile sind vorzugsweise derart gegenüber dem Mittelteil und den Seitenteilen geneigt, dass die Vorrichtungen leicht stapelbar sind. Idealerweise werden die beiden Verbindungsteile dazu in gleichem Winkel gegenüber dem Mittelteil und den Seitenteilen geneigt. Erfindungsgemässe Vorrichtungen weisen daher eine gute Stabilität auf und können trotzdem gelagert und transportiert werden, ohne viel Raum in Anspruch zu nehmen.

Nachfolgend wird die Erfindung anhand von Zeichnungen näher erläutert. Dabei zeigt:
- Figur 1: aus [1] bekannte Gitterbahnen 101 und Drahtnetze 102;
- Figur 2: eine erfindungsgemässe Vorrichtung 1;
- Figur 3: gestapelte erfindungsgemässe Vorrichtungen 1 gemäss Figur 2; und
- Figur 4: eine weitere erfindungsgemässe Vorrichtung 1'.

Figur 1 zeigt die eingangs beschriebenen und aus [1] bekannten Gitterbahnen 101 und Drahtnetze 102.

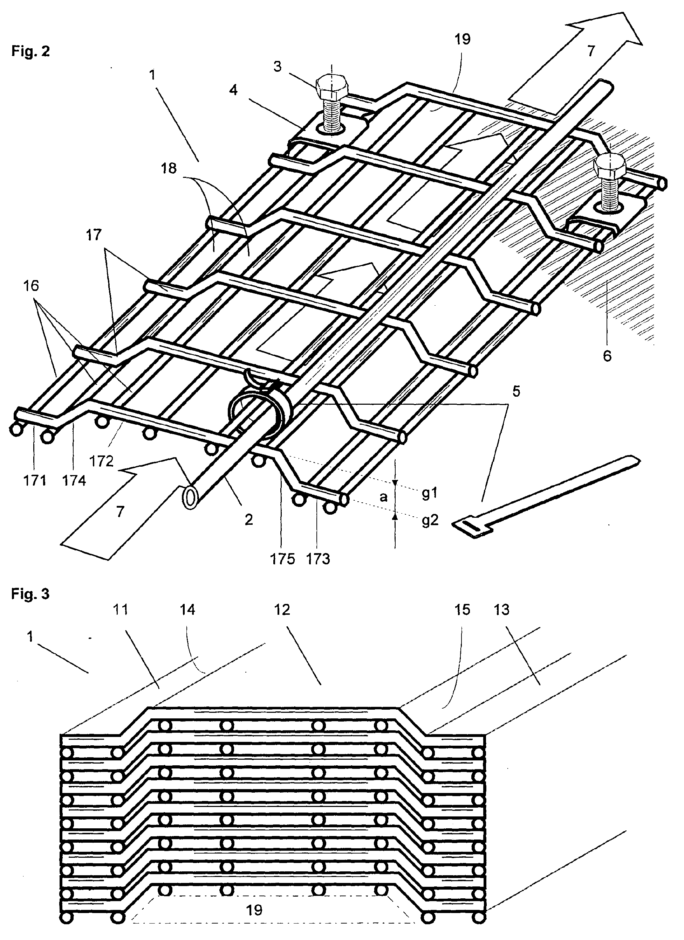

Figur 2 zeigt eine erfindungsgemässe, zur Montage von Kabeln 2 geeignete Vorrichtung 1, die Strukturelemente 16, die in Längsrichtung, d.h. parallel zu den zu verlegenden Kabeln 2, verlaufen sowie dazu in Querrichtung verlaufende Strukturelemente 17 aufweist. Zwischen den miteinander verbundenen Strukturelementen 16, 17, sind daher Gitteröffnungen 18 vorgesehen, in die Montagemittel, beispielsweise der in Figur 2 gezeigte Kabelbinder 5, einführbar sind.

Jedes der in Querrichtung verlaufenden Strukturelemente 17 ist dabei derart geformt, vorzugsweise gebogen, dass dessen entlang einer ersten Gerade g1 ausgerichtetes Mittelstück 172 über Verbindungsstücke 174, 175 beidseitig mit Endstücken 171, 173 verbunden ist, die entlang einer zweiten Gerade g2 verlaufen, die in einem Abstand a parallel zur ersten Gerade g1 verläuft.

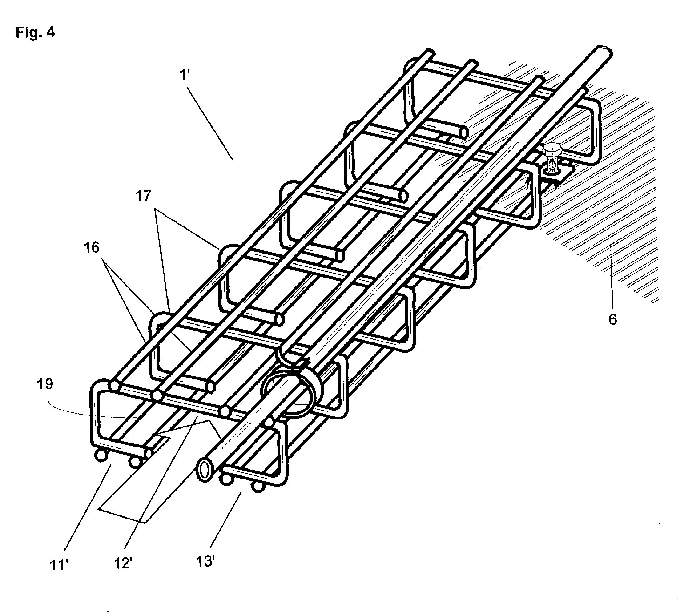

Die in Figur 2 beispielsweise gezeigte erfindungsgemässe Vorrichtung 1 wird durch sechs in Querrichtung verlaufende Strukturelemente 17 gebildet, die mit acht geraden, in Längsrichtung verlaufenden Strukturelementen 16 miteinander verbunden sind. Die Vorrichtung 1 weist dadurch, wie in Figur 3 gezeigt, ein in einer ersten Ebene verlaufendes Mittelteil 12 auf, welches über zwei schräg zur ersten Ebene verlaufende Verbindungsteile 14, 15 beidseitig mit voneinander abgewandten Seitenteilen 11, 13 verbunden sind, die in einer zweiten Ebene verlaufen, welche mit einem Abstand a parallel zur ersten Ebene ausgerichtet ist. Dadurch wird, nach der Montage der Vorrichtung 1 ein Kanal 19 zwischen der Wand 6 und dem Mittelteil 12 gebildet, welcher die Zirkulation von Luft 7 und die Befestigung von Montagemitteln 5 erleichtert. Aufgrund der beschriebenen Formgebung resultiert zudem eine hohe mechanische Stabilität der Vorrichtung 1.

Wie in Figur 2 gezeigt, werden die zu verlegenden Kabel 2 auf das Mittelteil 12 aufgelegt und beispielsweise mittels Kabelbindern 5 montiert. Der unter dem Mittelteil 12 bzw. zwischen dem Mittelteil 12 und der Wand 6 liegende Kanal 19 bleibt daher frei, könnte jedoch auch zur Verlegung einzelner Kabel 2 genutzt werden.

Zur bequemen Installation der Montagemittel 5 und zur Gewährleistung einer ungehinderten Luftzirkulation 3 sowie einer guten Stabilität der Vorrichtung wird vorzugsweise eine Kanalhöhe von einigen Zentimetern gewählt.

Die Formung der Vorrichtung 1 erfolgt vorzugsweise nach dem Verbinden der Strukturelemente 16, 17. Die Vorrichtung 1 kann daher kostengünstig durch Formung passender Flachgitter hergestellt werden. Wie in Figur 2 gezeigt, wird dabei vorgesehen, dass die in Querrichtung verlaufenden, gebogenen Strukturelemente 1.7 wenigstens im Bereich des Mittelteils 12 und der Seitenteile 11, 13 der Vorrichtung 1 auf der Unteroder Oberseite mit in Längsrichtung verlaufenden Strukturelementen 16 verbunden sind. Vorzugsweise weisen die Seitenteile 11, 13 der Vorrichtung 1 zwei in Längsrichtung verlaufende Strukturelemente 16 auf.

Zur Montage der Vorrichtung 1 werden vorzugsweise Montageplatten 4 verwendet, welche, wie in Figur 2 gezeigt, die beiden Strukturelemente 16 eines Seitenteils 11 bzw. 13 überlappen und eine Öffnung aufweisen, durch die eine Montageschraube 3 durchführbar ist. Die Vorrichtung 1 kann daher in einfacher Weise, aufgrund der guten Stabilität normalerweise mittels nur vier Schrauben 3 montiert werden, die in Dübel eingedreht werden, welche in Bohrungen in der Wand 6 gelagert sind. Abstandshalter sind für die Installation der Vorrichtung 1 daher nicht notwendig.

Wie in Figur 3 gezeigt, lassen sich die erfindungsgemässen Vorrichtungen 1 gut stapeln, sofern die Neigung der beiden Verbindungsteile 14, 15 gegenüber dem Mittelteil 12 und den Seitenteilen 11, 13 passend gewählt ist. Damit die Vorrichtungen gut stapelbar sind und trotzdem eine hohe Stabilität aufweisen, wird vorzugsweise ein Neigungswinkel von maximal 45° gewählt.

Die erfindungsgemässe Vorrichtung 1 kann aus verschiedenen Materialien gefertigt werden. Die Strukturelemente 16, 17 können draht-, zylinder- oder stabförmige Kunststoff- oder Metallelemente sein. Ferner kann die Vorrichtung auch aus einem gelochten Blech geformt werden. In vorzugsweisen Ausgestaltungen sind die Strukturelemente 16, 17 mit einem Kunststoff oder mit nicht korrodierendem Metall beschichtet.

Figur 4 zeigt eine erfindungsgemässe Vorrichtung 1', deren Seitenteile 11', 13' gegeneinander, unter das Mittelteil 12' gebogen sind, wodurch wiederum ein Kanal 19 gebildet wird, der eine gute Luftzirkulation gewährleistet und eine einfache Befestigung der Montagemittel 5 erlaubt.

Die erfindungsgemässe Vorrichtung 1, 1' wurde in bevorzugten Ausgestaltungen beschrieben und dargestellt. Anhand der erfindungsgemässen Lehre sind jedoch weitere fachmännische Ausgestaltungen der beschriebenen Vorrichtung 1 realisierbar. Insbesondere kann die Vorrichtung 1 in verschiedenen Abmessungen realisiert werden. Weiterhin kann die Vorrichtung 1 bezüglich deren Mittelachse x symmetrisch oder asymmetrisch ausgestaltet sein. Möglich ist ferner die Verwendung von unterschiedlichen Montagemitteln. Beispielsweise können einseitig Montagemittel verwendet werden die ein rasches Lösen und Befestigen eines Seitenteils 11 bzw. 13 der Vorrichtung 1 erlauben. Dadurch ist es möglich Kabel 2 in den zwischen der Wand 6 und der Vorrichtung 1 gebildeten Kanal 19 einzuführen. Beispielsweise können Starkstromkabel innerhalb des Kanals 19 vorgesehen und Kommunikationskabel, die gelegentlich zu erneuern sind, ausserhalb des Kanals 19 angeordnet werden, wodurch eine gute Entkopplung der unterschiedlichen elektrischen Systeme erzielt wird.

## Patentansprüche

1. Vorrichtung (1) zur Montage von Kabeln (2) an einer Wand (6) mit in Längsrichtung, parallel zu den zu verlegenden Kabeln (2), sowie dazu in Querrichtung verlaufenden Strukturelementen (16 bzw. 17), zwischen denen Öffnungen (18) gebildet werden, **dadurch gekennzeichnet, dass** die in Querrichtung verlaufenden Strukturelemente (17) derart geformt und mit den in Längsrichtung verlaufenden Strukturelementen (16) verbunden sind, dass die an der Wand (6) installierte Vorrichtung (1) ein in einer ersten Ebene parallel zur Wand (6) und davon beabstandet verlaufendes Mittelteil (12) aufweist, welches über zwei schräg zur genannten Ebene verlaufende Verbindungsteile (14, 15) beidseitig mit je einem an der Wand (6) montierbaren Seitenteil (11 bzw. 13) verbunden ist.

2. Vorrichtung (1) nach Anspruch 1, **dadurch gekennzeichnet, dass** die Seitenteile (11, 13) zumindest annähernd in einer zweiten Ebene verlaufen, die parallel zur ersten Ebene ausgerichtet ist, und dass die Seitenteile (11, 13) gegeneinander oder voneinander abgewandt sind.

3. Vorrichtung (1) nach Anspruch 1 oder 2, **dadurch gekennzeichnet, dass** die Strukturelemente (16, 17) draht, zylinder- oder stabförmige Kunststoff- oder Metallelemente sind, mittels denen ein vier- oder mehrfach gekrümmtes Gitter gebildet wird oder dass die Strukturelemente (16, 17) Teile eines gelochten Blechs sind.

4. Vorrichtung (1) nach Anspruch 1, 2 oder 3, **dadurch gekennzeichnet, dass** die in Querrichtung verlaufenden, gebogenen Strukturelemente (17) Teil des Mittelteils (12), der Verbindungsteile (14, 15) und der Seitenteile (11, 13) bilden und wenigstens im Bereich des Mittelteils (12) und der Seitenteile (11, 13) mit in Längsrichtung verlaufenden Strukturelementen (16) verbunden sind.

5. Vorrichtung (1) nach einem der Ansprüche 1 bis 4, **dadurch gekennzeichnet, dass** die zwei Verbindungsteile (14, 15) derart gegenüber dem Mittelteil (12) und den voneinander abgewandten Seitenteilen (11, 13) geneigt sind, dass die Vorrichtungen (1) stapelbar sind.

6. Vorrichtung (1) nach Anspruch 5, **dadurch gekennzeichnet, dass** die Verbindungsteile (14, 15) in einem Winkel von 45° oder weniger gegenüber dem Mittelteil (12) und den Seitenteilen (11, 13) geneigt sind.

7. Vorrichtung (1) nach einem der Ansprüche 1 bis 6, **dadurch gekennzeichnet, dass** die Vorrichtung (1) mittels Schrauben (3) und Montageplatten (4) montierbar sind, die eine Öffnung zur Aufnahme einer Schrauben (3) aufweisen und vorzugsweise so breit sind, dass sie zwei in Längsrichtung verlaufenden Strukturelemente (16) überlappen können.

8. Vorrichtung (1) nach einem der Ansprüche 1 bis 7, **dadurch gekennzeichnet, dass** die Vorrichtung (1) bezüglich deren Mittelachse (x) symmetrisch oder asymmetrisch ausgestaltet ist.
